# EUROPÄISCHE PATENTANMELDUNG

(11) **EP 3 254 788 A1**
(43) Veröffentlichungstag der Anmeldung: **13.12.2017**
(21) Anmeldenummer: 16173031.2
(22) Anmeldetag: 06.06.2016
(51) Int. Cl.: B23B 31/107, B23B 51/00

(54) **AUFRAUWERKZEUG ZUM AUFRAUEN EINER BOHRLOCHOBERFLÄCHE**

(71) Anmelder: HILTI Aktiengesellschaft, 9494 Schaan (LI)
(72) Erfinder: Bee, Peter, 7307 Jenins (CH); Popp, Franz, 86807 Buchloe (DE)
(74) Vertreter: Hilti Aktiengesellschaft Corporate Intellectual Property

(57) **Zusammenfassung**

Die Erfindung betrifft ein Aufrauwerkzeug (2) zum Aufrauen einer Bohrlochoberfläche, mit einem Kopplungsabschnitt (6) zum Einspannen des Werkzeugs (2) in ein Bohrgerät und einem Werkzeugkopf (10) zur Bearbeitung der Bohrlochoberfläche, wobei an dem Werkzeugkopf (10) wenigstens ein radial auskragender Schneideinsatz (12) vorgesehen ist. Der Schneideinsatz (12) ist mit wenigstens einem Befestigungselement an dem Werkzeugkopf (10) befestigt, wobei das Befestigungselement formschlüssig in eine an dem Schneideinsatz (12) gebildete Ausnehmung greift.

## Beschreibung

Die Erfindung betrifft ein Aufrauwerkzeug zum Aufrauen einer Bohrlochoberfläche, mit einem Kopplungsabschnitt zum Einspannen des Werkzeugs in ein Bohrgerät und einem Werkzeugkopf zur Bearbeitung der Bohrlochoberfläche, wobei an dem Werkzeugkopf wenigstens ein radial auskragender Schneideinsatz vorgesehen ist.

Zur Befestigung von Bauteilen an Untergründen ist es bekannt, profilierte Ankerstangen mittels einer chemischen Mörtelmasse in vorgefertigten Sacklochbohrungen des Untergrunds festzulegen. Die Sacklochbohrungen können mithilfe diamantbestückter Werkzeuge hergestellt werden. Die Bohrlochwand eines solchen Bohrlochs kann, abhängig von dem Material des Untergrunds, sehr glatt sein. Um auch hohe an der Ankerstange angreifende Zugkräfte zuverlässig auf den Untergrund zu übertragen, ist es von Vorteil, wenn die Mörtelmasse im ausgehärtet Zustand formschlüssig mit der Bohrlochwand zusammenwirkt. Dies kann dadurch erreicht werden, dass wenigstens ein Teil der Bohrlochwand aufgeraut bzw. mit einer Profilierung versehen wird.

Werkzeuge und Verfahren zum Aufrauen einer Bohrlochoberfläche der eingangs genannten Art dienen daher insbesondere dazu, die Tragfähigkeit von chemischen Mörtelmassen in diamantgebohrten Löchern zu erhöhen. Die vergleichsweise glatte innere Mantelfläche eines Bohrlochs wird dabei strukturiert und beispielsweise mit definierten Hinterschnitten versehen.

Die US 2002/0160705 A1 zeigt ein Werkzeug, um derartige Hinterschnitte in eine Bohrlochoberfläche einzubringen. Das Werkzeug hat einen Werkzeugkopf mit einem Gehäuse, in dem Pins sitzen, die zur Bearbeitung der Bohrlochoberfläche dienen. Die Pins liegen an ihrer dem Bohrloch abgewandten Rückseite an einem Gummi- oder Metallkörper an, der in einer zentralen Kavität des Gehäuses sitzt. Das Gehäuse des Werkzeugkopfs ist mit einem Gewinde lösbar an einem Werkzeugschaft befestigt, dessen Durchmesser wesentlich geringer ist, als der Durchmesser des Werkzeugs. Hierbei ist nachteilig, dass das Werkzeug insgesamt eine geringe Steifigkeit aufweist und bei der Bearbeitung großer Bohrtiefen, die einem Mehrfachen der Bohrlochdurchmessers entsprechen, instabil werden kann.

Vor diesem Hintergrund liegt der vorliegenden Erfindung die technische Problemstellung zugrunde, ein verbessertes Aufrauwerkzeug zum Aufrauen einer Bohrlochoberfläche anzugeben, welches die voranstehenden Nachteile nicht oder zumindest in geringerem Maße aufweist und insbesondere in kostengünstiger und einfacher Weise die zuverlässige Bearbeitung großer Bohrtiefen ermöglicht.

Die voranstehend beschriebene, technische Problemstellung wird durch ein Aufrauwerkzeug nach Anspruch 1 und ein Verfahren nach Anspruch 15 gelöst. Weitere Ausgestaltungen der Erfindung ergeben sich aus den abhängigen Ansprüchen und der nachstehenden Beschreibung.

Das Aufrauwerkzeug zum Aufrauen einer Bohrlochoberfläche hat einen Kopplungsabschnitt zum Einspannen des Werkzeugs in ein Bohrgerät und einen Werkzeugkopf zur Bearbeitung der Bohrlochoberfläche, wobei an dem Werkzeugkopf wenigstens ein radial auskragender Schneideinsatz vorgesehen ist. Der Schneideinsatz ist mit wenigstens einem Befestigungselement an dem Werkzeugkopf befestigt, wobei das Befestigungselement formschlüssig in eine an dem Schneideinsatz gebildete Ausnehmung greift. Dadurch, dass die Befestigung des Schneideinsatzes durch eine unmittelbar an dem Schneideinsatz vorgesehene Ausnehmung und ein Befestigungselement bewirkt wird, kann der Werkzeugkopf selbst massiv und steif ausgestaltet werden. Das Werkzeug ist auch in großen Bohrtiefen zuverlässig einsetzbar. Weiter lässt sich mit einem in dieser Weise ausgestalteten Werkzeug eine verbesserte Bohrlochaufrauung erreichen, so dass sich höhere ertragbare Zuglasten für eine mit einer chemischen Mörtelmasse in einer solchen Bohrung verankerte Ankerstange ergeben.

Das Befestigungselement kann lösbar an dem Werkzeugkopf gehalten sein, so dass der Schneideinsatz austauschbar ist.

Der Schneideinsatz kann aus einem Hartmetall- oder Diamantschneidstoff hergestellt sein.

Nach einer Weiterbildung des Aufrauwerkzeugs ist vorgesehen, dass das Befestigungselement ein Stift ist, der insbesondere lösbar an oder in dem Werkzeugkopf angeordnet ist. Eine solche Stiftverbindung ist einfach und kostengünstig herstellbar und kann kompakt in den Werkzeugkopf integriert werden. Gemäß alternativen Ausgestaltungen kann vorgesehen sein, dass das Befestigungselement eine Schraube ist, was ebenfalls eine kostengünstige, lösbare Befestigung des Schneideinsatzes ermöglicht.

Um eine Beschädigung des Schneideinsatzes durch harte Partikel oder Armierungen im Bereich des aufzurauenden Bohrlochs zu vermeiden, kann der Schneideinsatz mit einem radialen Spiel an dem Werkzeugkopf befestigt sein. Der Schneideinsatz kann daher in einer ersten Position radial weiter über eine äußere Mantelfläche des Werkzeugkopfs hinaus ragen als in einer zweiten Position. Mit anderen Worten ist der Schneideinsatz in der zweiten Position im Vergleich zur ersten Position radial in Richtung des Werkzeugkopfs zurückversetzt angeordnet.

Radial" oder "radiale Richtung" entspricht vorliegend einer Orientierung oder Richtung quer zu einer Längserstreckung oder Längsachse des Aufrauwerkzeugs. "Axial" oder "axiale Richtung" bedeutet vorliegend, dass sich eine Orientierung oder Richtung entlang einer Längserstreckung oder Längsachse des Aufrauwerkzeugs erstreckt.

Ein solches radiales Spiel kann dadurch erreicht werden, dass die Ausnehmung durch zwei gegenüberliegend angeordnete Schultern begrenzt ist, wobei ein im Bereich der Ausnehmung angeordneter Durchmesser des Stifts kleiner ist, als eine zwischen den Schultern vorgegebene lichte Weite der Ausnehmung. Es versteht sich, dass gemäß weiteren Ausgestaltungen ein radiales Spiel auch zwischen einer Ausnehmung des Schneideinsatzes und einer Schraube, einem Niet, einer Passfeder oder dergleichen als Befestigungselement gebildet sein kann.

Ein robuster und kostengünstig herstellbarer Schneideinsatz kann dadurch angegeben werden, dass der Schneideinsatz eine im Wesentlichen kreiszylindrische Form hat und die Ausnehmung eine umfangsseitig kreisrund umlaufende Nut ist.

Der Schneideinsatz kann eine im Wesentlichen kreiszylindrische Form aufweisen und an einem Ende oder an zwei entgegengesetzten Enden einen Wirkbereich zum Aufrauen der Bohrlochoberfläche haben, der nach Art eines Kegelstumpfs geformt ist. Die abgestumpfte Gestaltung des Wirkbereichs begünstigt die Standzeit des Schneideinsatzes. In der Spitze des Kegelstumpfs ist z. B. ein Spitzeneinsatz aus einem Material, das noch härter als der Stift ist, eingebettet.

Um einen geringen Verschleiß und eine zuverlässige Kopplung zwischen dem Befestigungselement, insbesondere Stift, und dem Schneideinsatz zu erreichen, kann das Befestigungselement eine äußere Mantelfläche aufweisen, die an einem Nutgrund der Nut des Schneideinsatzes anliegt. Insbesondere für den Fall, dass der Schneideinsatz im Wesentlichen zylinderförmig gestaltet ist und eine kreisrund umlaufende Nut hat, kann zwischen einem ebenfalls kreiszylindrisch geformten Stift und dem Schneideinsatz ein reibungsarmer Punktkontakt gebildet sein.

Der Schneideinsatz kann wenigstens zwei Ausnehmungen aufweisen. Auf diese Weise kann der Schneideinsatz mit zwei Stiften zuverlässig gesichert werden.

Weiter kann der Schneideinsatz einen symmetrischen Aufbau haben, mit einem zentralen Mittelteil, an den sich zweiseitig jeweils eine Nut und ein Wirkbereich zum Aufrauen der Bohrlochoberfläche anschließen.

Zur Erhöhung der Schneid- bzw. Aufrauleistung können wenigstens zwei Schneideinsätze an dem Werkzeugkopf vorgesehen sein, wobei die Schneideinsätze insbesondere unter einem axialen Abstand und/oder einem Winkelversatz zueinander an dem Werkzeugkopf angeordnet sind. Die Schneideinsätze können um 90° oder um 180° zueinander versetzt angeordnet sein, mit Blick in Axialrichtung.

Nach einer Weiterbildung des Aufrauwerkzeugs kann vorgesehen sein, drei oder mehr Schneideinsätze an dem Werkzeugkopf zu befestigen. Die Schneideinsätze können insbesondere unter äquidistanten Winkelabständen umfangsseitig verteilt angeordnet sein.

Um mit einem einzigen Schneideinsatz zwei Wirkbereiche zum Aufrauen der Bohrlochoberfläche bereitzustellen, kann der Werkzeugkopf eine radiale Durchgangsöffnung aufweisen, in der der Schneideinsatz angeordnet ist, wobei sich der Schneideinsatz mit zwei entgegengesetzten Enden jeweils radial über eine Mantelfläche des Werkzeugkopfs hinaus erstreckt. Der Schneideinsatz durchdringt den Werkzeugkopf somit vollständig und tritt zweiseitig radial aus dem Werkzeugkopf hervor. Die beiden Wirkbereiche können als Kegelstumpf an einem im Wesentlichen kreiszylindrischen Schneideinsatz ausgebildet sein.

Der Werkzeugkopf kann eine axiale Ausnehmung haben, in der das Befestigungselement angeordnet ist. Eine Schraube, ein Stift oder ein Niet kann daher beispielsweise stirnseitig in dem Werkzeugkopf aufgenommen sein, so dass das Befestigungselement von der Bohrlochoberfläche abgewandt ist und während der Bearbeitung der Bohrlochoberfläche nicht beschädigt wird.

Das Befestigungselement kann zur Befestigung von wenigstens zwei Schneideinsätzen an dem Werkzeugkopf vorgesehen sein. So wirkt das Befestigungselement sowohl mit einer Ausnehmung eines ersten Schneideinsatzes als auch mit einer Ausnehmung eines zweiten Schneideinsatzes zusammen. Ferner kann die Anzahl der notwendigen Befestigungselemente reduziert oder eine zweifache Sicherung der Schneideinsätze erreicht werden.

Sind beispielsweise zwei axial stirnseitig in den Werkzeugkopf eingeschobene Stifte vorgesehen, die mit einem radialen Abstand zueinander angeordnet sind, so können zwei axial beabstandete Schneideinsätze, die den Werkzeugkopf durchdringen, mit ihren Ausnehmungen jeweils an beiden Stiften anliegen.

Zum Absaugen oder Ausblasen von Bohrstaub kann das Aufrauwerkzeug einen Schaft mit einem innenliegenden Kanal aufweisen, der in wenigstens eine an dem Werkzeugkopf vorgesehene Öffnung mündet. Das Werkzeug kann im Bereich seines Werkzeugschafts beispielsweise mit einer Druckluftversorgung oder einer Absaugeinrichtung verbunden werden.

Die Werkzeuglänge kann wenigstens dem Sechsfachen, bevorzugt wenigstens dem Achtfachen des Werkzeugdurchmessers entsprechen. Mithilfe des Werkzeugs können daher auch große Bohrtiefen erreicht werden.

Der Durchmesser des Werkzeugkopfs kann im Wesentlichen dem Durchmesser eines Werkzeugschafts entsprechen. Das Werkzeug kann daher insgesamt steif ausgebildet werden und eignet sich insbesondere für die Bearbeitung großer Bohrtiefen.

Alternativ oder ergänzend kann der Werkzeugkopf einstückig mit einem Werkzeugschaft verbunden sein. Dies stellt eine weitere Möglichkeit dar, das Werkzeug auszusteifen. Insbesondere in Kombination mit austauschbaren Schneideinsätzen kann ein robustes und im Betrieb dennoch kostengünstiges Werkzeug angegeben werden, da nach dem Verschleiß der Schneideinsätze lediglich die Schneideinsätze selbst, nicht jedoch der ganze Werkzeugkopf ausgetauscht werden müssen.

Das erfindungsgemäße Aufrauwerkzeug kann durch seine robuste Ausgestaltung unmittelbar in einem eingespannten Bohrgerät zum Bohren eines Bohrlochs eingesetzt werden. Die Arbeitsschritte "Bohren" und "Aufrauen" sind daher in einer Maschinenaufspannung möglich, so dass lediglich das Bohrwerkzeug gegen das Aufrauwerkzeug getauscht werden muss. Mithilfe des Ständers kann der Bohrvorgang geführt und ggf. automatisiert ausgeführt werden, so dass der Bedienereinfluss auf das Bohr- und Aufrauergebnis minimiert werden kann.

Nachfolgend wird die Erfindung anhand einer Ausführungsbeispiele darstellenden Zeichnung beschrieben. Es zeigen jeweils schematisch:
- Fig. 1: ein erfindungsgemäßes Aufrauwerkzeug;
- Fig. 2: einen Werkzeugkopf des Aufrauwerkzeugs nach Figur 1;
- Fig. 3: einen Schneideinsatz und einen Stift für das Aufrauwerkzeug nach Figur 1;
- Fig. 4: ein Bohrgerät mit dem Aufrauwerkzeug nach Figur 1.

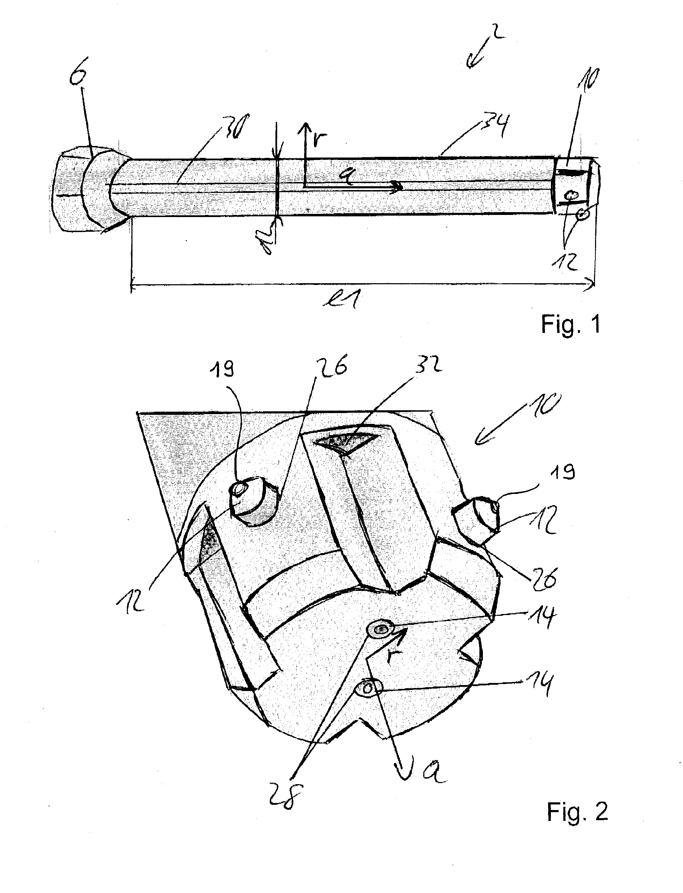

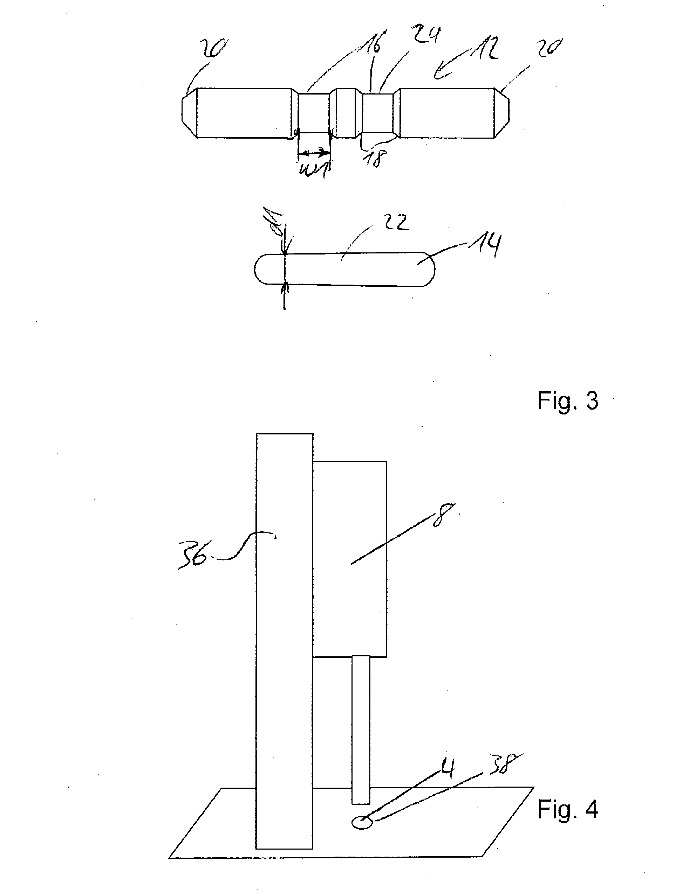

Figur 1 zeigt ein Aufrauwerkzeug 2 zum Aufrauen einer Bohrlochoberfläche 4 (Fig. 4), mit einem Kopplungsabschnitt 6 zum Einspannen des Werkzeugs 2 in ein Bohrgerät 8 (vgl. Fig. 4) und einem Werkzeugkopf 10 zur Bearbeitung der Bohrlochoberfläche 4, wobei an dem Werkzeugkopf 10 radial auskragende Schneideinsätze 12 vorgesehen sind.

Die Schneideinsätze 12 sind mit Befestigungselementen in Form von Stiften 14 an dem Werkzeugkopf 10 befestigt. Die Stifte 14 greifen jeweils formschlüssig in an den Schneideinsätzen 12 gebildete Ausnehmungen 16 (Fig. 3).

Die Stifte 14 ermöglichen eine lösbare Befestigung der Schneideinsätze 12. Die Schneideinsätze 12 sind daher leicht austauschbar.

Die Schneideinsätze 14 sind mit radialem Spiel an dem Werkzeugkopf 10 befestigt. Die radiale Richtung r und die axiale Richtung a, die entlang einer Längserstreckung des Werkzeugs 2 verläuft, sind in den Figuren 1 und 2 dargestellt. Die Schneideinsätze 12 können durch das radiale Spiel in Richtung r daher in Richtung des Werkzeugkopfs zurückversetzt werden, wenn sie auf harte Partikel treffen, um eine Beschädigung der Schneideinsätze 12 zu vermeiden. Das Spiel wird dadurch erreicht, dass ein im Bereich der Ausnehmung 16 angeordneter Durchmesser d1 des Stifts 14 kleiner ist als eine zwischen Schultern 18 vorgegebene lichte Weite w1 der Ausnehmung 16 (Fig. 3), genauer gesagt zwischen den Anlagestellen des Stifts 14 an den Schultern 18.

Die Schneideinsätze 12 sind aus Hartmetall gefertigt.

Die Schneideinsätze 12 haben eine im Wesentlichen kreiszylindrische Form.

Die Ausnehmungen 16 sind vorliegend als umlaufende Nuten 16 ausgebildet.

An entgegengesetzten Enden weist ein jeweiliger Schneideinsatz 12 Wirkbereiche 20 zum Aufrauen der Bohrlochoberfläche 4 auf, die als Kegelstumpf geformt sind, an deren Enden Spitzeneinsätze 19 aus noch härterem Material vorhanden sind.

Im Inneren des Werkzeugkopfs 10 liegen die Stifte 14 jeweils mit ihren äußeren Mantelflächen 22 an einem Nutgrund 24 einer jeweiligen Nut 16 an und halten die Schneideinsätze 12 auf diese Weise in dem Werkzeugkopf 10.

Jeder der Schneideinsätze 12 weist zwei Ausnehmungen bzw. Nuten 16 auf, so dass er unabhängig von seiner Einschubrichtung in den Werkzeugkopf 10 nach dem axial stirnseitigen Einführen des jeweils zugeordneten Stifts 14 zuverlässig formschlüssig und mit Spiel gegen ein radiales Verlieren gesichert ist.

Die Schneideinsätze 12 sind mit einem axialen Abstand und unter einem Winkelversatz von 90° (in Axialrichtung gesehen) zueinander an dem Werkzeugkopf 10 angeordnet.

Die Schneideinsätze 12 sitzen in radialen Durchgangsöffnungen 26, während die Stifte 14 in axialen Bohrungen 28 angeordnet sind.

Jeder der Stifte 14 liegt an Ausnehmungen 16 beider Schneideinsätze 12 an.

Das Aufrauwerkzeug 2 weist einen Schaft 34 mit einem innenliegenden Kanal 30 auf, der in an dem Werkzeugkopf 10 vorgesehene Öffnungen 32 mündet. Die Öffnungen 32 und der Kanal 30 können zum Ausblasen oder Absaugen von Bohrstaub dienen.

Die Werkzeuglänge l1 entspricht wenigstens dem Sechsfachen, bevorzugt wenigstens dem Achtfachen des Werkzeugdurchmessers d2, wobei der Durchmesser des Werkzeugkopfs 10 im Wesentlichen dem Durchmesser d2 des Werkzeugschafts 34 entspricht.

Vorliegend ist der Werkzeugkopf 10 einstückig mit dem Werkzeugschaft 34 verbunden. Anhand von Fig. 4 wird nachstehend ein Verfahren zum Aufrauen einer Bohrlochoberfläche 4 erläutert.

Zunächst wird ein Bohrgerät 8 zum Herstellen eines Bohrlochs 38 in einen Ständer 36 eingespannt. Vorliegend ist anschließend mithilfe eines in dem Bohrgerät 8 eingespannten Diamantbohrers (nicht dargestellt) das Bohrloch 4 erzeugt worden.

Der Diamantbohrer wird danach durch ein Aufrauwerkzeug 10 ersetzt, das seinerseits in das Bohrgerät 8 eingespannt wird. Das Aufrauwerkzeug 10 wird zum Aufrauen der Bohrlochoberfläche 4 in das Bohrloch 38 eingeführt.

## Patentansprüche

1. Aufrauwerkzeug zum Aufrauen einer Bohrlochoberfläche, mit einem Kopplungsabschnitt (6) zum Einspannen des Werkzeugs (2) in ein Bohrgerät (8) und einem Werkzeugkopf (10) zur Bearbeitung der Bohrlochoberfläche (4), wobei an dem Werkzeugkopf (10) wenigstens ein radial auskragender Schneideinsatz (12) vorgesehen ist, **dadurch gekennzeichnet, dass** der Schneideinsatz (12) mit wenigstens einem Befestigungselement an dem Werkzeugkopf (10) befestigt ist, wobei das Befestigungselement formschlüssig in eine an dem Schneideinsatz (12) gebildete Ausnehmung (16) greift.

2. Aufrauwerkzeug nach Anspruch 1, **dadurch gekennzeichnet, dass** das Befestigungselement ein Stift (14) ist, der insbesondere lösbar an oder in dem Werkzeugkopf (10) angeordnet ist.

3. Aufrauwerkzeug nach einem der voranstehenden Ansprüche 1 oder 2, **dadurch gekennzeichnet, dass** der Schneideinsatz (12) mit einem radialen Spiel an dem Werkzeugkopf (10) befestigt ist.

4. Aufrauwerkzeug nach Anspruch 2 und Anspruch 3, **dadurch gekennzeichnet, dass** die Ausnehmung (16) durch zwei gegenüberliegend angeordnete Schultern (18) begrenzt ist, wobei ein im Bereich der Ausnehmung (16) angeordneter Durchmesser (d1) des Stifts (14) kleiner ist als eine zwischen den Schultern (18) vorgegebene, lichte Weite (w1) der Ausnehmung (16).

5. Aufrauwerkzeug nach einem der Ansprüche 1 bis 4, **dadurch gekennzeichnet, dass** der Schneideinsatz (12) eine im Wesentlichen kreiszylindrische Form hat und die Ausnehmung (16) eine umfangsseitig kreisrund umlaufende Nut (16) ist.

6. Aufrauwerkzeug nach Anspruch 5, **dadurch gekennzeichnet, dass** das Befestigungselement eine äußere Mantelfläche (22) aufweist, die an einem Nutgrund (24) der Nut (16) anliegt.

7. Aufrauwerkzeug nach einem der Ansprüche 1 bis 6, **dadurch gekennzeichnet, dass** der Schneideinsatz (12) wenigstens zwei Ausnehmungen (16) aufweist.

8. Aufrauwerkzeug nach einem der voranstehenden Ansprüche, **dadurch gekennzeichnet, dass** wenigstens zwei Schneideinsätze (12) an dem Werkzeugkopf (10) vorgesehen sind, wobei die Schneideinsätze (12) insbesondere unter einem axialen Abstand und/oder einem Winkelversatz zueinander an dem Werkzeugkopf (10) angeordnet sind.

9. Aufrauwerkzeug nach einem der voranstehenden Ansprüche, **dadurch gekennzeichnet, dass** der Werkzeugkopf (10) wenigstens eine radiale Durchgangsöffnung (26) aufweist, in der der Schneideinsatz (12) angeordnet ist, wobei sich der Schneideinsatz (12) mit zwei entgegengesetzten Enden (20) jeweils radial über eine Mantelfläche des Werkzeugkopfs (10) hinaus erstreckt.

10. Aufrauwerkzeug nach einem der voranstehenden Ansprüche, **dadurch gekennzeichnet, dass** der Werkzeugkopf (10) wenigstens eine axiale Ausnehmung (28) hat, in der das Befestigungselement angeordnet ist.

11. Aufrauwerkzeug nach einem der voranstehenden Ansprüche, **dadurch gekennzeichnet, dass** das Befestigungselement zur Befestigung von wenigstens zwei Schneideinsätzen (12) an dem Werkzeugkopf (10) vorgesehen ist.

12. Aufrauwerkzeug nach einem der voranstehenden Ansprüche, **dadurch gekennzeichnet, dass** das Aufrauwerkzeug (2) einen Schaft (34) mit einem innenliegenden Kanal (30) aufweist, der in wenigstens eine an dem Werkzeugkopf (10) vorgesehene Öffnung (32) mündet.

13. Aufrauwerkzeug nach einem der voranstehenden Ansprüche, **dadurch gekennzeichnet, dass** eine Werkzeuglänge (l1) wenigstens dem Sechsfachen, bevorzugt wenigstens dem Achtfachen, des Werkzeugdurchmessers (d2) entspricht.

14. Aufrauwerkzeug nach einem der voranstehenden Ansprüche, **dadurch gekennzeichnet, dass** der Durchmesser des Werkzeugkopfs (10) im Wesentlichen dem Durchmesser (d2) eines Werkzeugschafts (34) entspricht und/oder dass der Werkzeugkopf (10) einstückig mit einem Werkzeugschaft (34) verbunden ist.
